(19) Europäisches Patentamt
European Patent Office
Office européen des brevets

(11) **EP 1 990 138 B1**

(12) **FASCICULE DE BREVET EUROPEEN**

(45) Date de publication et mention
de la délivrance du brevet:
**09.03.2011 Bulletin 2011/10**

(51) Int Cl.:
**B25J 9/16** (2006.01)

(21) Numéro de dépôt: **08155569.0**

(22) Date de dépôt: **02.05.2008**

(54) **Procédé de traitement pour la capture de mouvement d'une structure articulée**

Datenverarbeitungsverfahren zur Bewegungserfassung einer Gelenkstruktur

Treatment method for capturing the movement of an articulated structure

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **11.05.2007 FR 0755008**

(43) Date de publication de la demande:
**12.11.2008 Bulletin 2008/46**

(73) Titulaires:
• **Commissariat à l'Énergie Atomique et aux Énergies Alternatives**
**75015 Paris (FR)**
• **INRIA**
**78153 Le Chesnay (FR)**

(72) Inventeurs:
• **Jammes, Fabien**
**38260, SAINT HILAIRE DE LA COTE (FR)**
• **Flament, Bruno**
**38134, SAINT JULIEN DE RATZ (FR)**

• **Wieber, Pierre-Brice**
**38000, GRENOBLE (FR)**

(74) Mandataire: **Ilgart, Jean-Christophe et al**
**BREVALEX**
**95 rue d'Amsterdam**
**75378 Paris Cedex 8 (FR)**

(56) Documents cités:
**DE-A1- 19 501 094      US-A1- 2002 097 245**

• **XIAOPING YUN ET AL.: "Implementation and Experimental Results of a Quaternion-Based Kalman Filter for Human Body Motion Tracking" ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA, IEEE, 18 avril 2005 (2005-04-18), pages 317-322, XP010872288 ISBN: 0-7803-8914-X**

**Description**

Domaine technique et art antérieur

L'invention concerne un procédé de traitement pour la capture de mouvement d'une structure articulée et, plus précisément, un procédé d'obtention de paramètres simulés aptes à caractériser le mouvement d'une structure articulée. L'invention concerne également un procédé de reproduction de mouvement de structure articulée qui met en oeuvre un procédé d'obtention de paramètres simulés selon l'invention.
Le domaine technique de l'invention est celui de la détermination, à l'aide de mesures en temps réel ou non, d'un ou de plusieurs paramètres permettant de décrire le mouvement d'une structure articulée dans un référentiel donné ou d'un ou de plusieurs paramètres intrinsèques à une structure articulée en mouvement et/ou à un système de capteurs associés à la mesure de paramètres intrinsèques d'une structure articulée en mouvement.
A titre d'exemples non limitatifs, le procédé de l'invention s'applique avantageusement dans les cas suivants :

- les applications industrielles telles que la robotique (les capteurs sont alors positionnés sur le robot), la téléopération (les capteurs sur alors placés sur un homme ou un animal), l'étalonnage de mécanisme, etc.,
- les applications multimédia telles que, par exemple, les jeux vidéo nécessitant une interaction avec l'utilisateur,
- les applications de simulation (par exemple la simulation de vol),
- la création d'images de synthèse et d'édition de jeux vidéo,
- les applications médicales,
- la biomécanique.

Un certain nombre de systèmes connus permettent d'accéder à une estimation de tout ou partie des paramètres du mouvement d'un objet qui se déplace. On citera, par exemple, le système Vicon®, le système Optotrak®, le système InterSense®, le système POLHEMUS®, etc. Tous ces systèmes, en particulier les systèmes optiques de type vidéo, présentent l'inconvénient de soumettre leurs utilisateurs à de fortes contraintes d'espace. En effet, les utilisateurs doivent impérativement rester dans le volume d'acquisition (champ des caméras, volume du champ magnétique, volume d'émission des sources ultrasons, etc.).
D'autres systèmes ne présentent pas cet inconvénient. Xsens Technologies®, par exemple, utilise des centrales inertielles contenant des accéléromètres, des magnétomètres et des gyromètres qui permettent de s'abstraire d'une quelconque restriction spatiale.
Le document intitulé « Implementation and Experimental Results of a Quaternion-Based Kalman Filter for Human Body Motion Tracking » (Xiaoping Yun, Conrado Aparicio, Eric R. Bachmann and Robert B.McGhee ; Proceedings of the 2005 IEEE, International Conference on Robotics and Automation, Barcelone, Espagne, Avril 2005) divulgue également un système qui utilise des centrales inertielles contenant un accéléromètre, un magnétomètre et un gyromètre triaxe. Outre les centrales inertielles, le système utilise un modèle géométrique du corps articulé et un modèle de capteur. Le modèle de capteur est un modèle statique pour lequel on considère que l'accélération mesurée est uniquement due à la gravité. De plus, l'orientation de chaque capteur est reconstituée indépendamment des grandeurs mesurées par les autres capteurs et le filtrage utilisé est totalement dépendant des gyromètres.
L'utilisation de gyromètres présente des inconvénients. En effet, l'utilisation d'un gyromètre induit un biais lors de mouvements rapides continus et, en conséquence, une perte de précision au cours du temps. De plus, les gyromètres sont des capteurs onéreux à forte consommation électrique.
D'autres systèmes sont également connus de l'art antérieur. Le document intitulé « Real-time Motion Capture for a Human Body using Accelerometers » (Jihong Lee and Insoo Ha ; Robotica (2001), volume 19, pp.601-610) divulgue un système qui utilise essentiellement des accéléromètres et un modèle articulé du corps en mouvement permettant de calculer de proche en proche les accélérations du corps. Ce procédé nécessite la connaissance de l'accélération en translation et en rotation d'au moins un segment.
Le document DE-A1-195 01 094 divulgue un procédé de reproduction des mouvements d'une structure articulée grâce à la détermination des paramètres du modèle d'un système de mesure d'une structure articulée avec un modèle de la structure et un modèle du système de mesure sans toutefois permettre une reproduction précise des mouvements du système articulée dû aux erreurs de mesure des capteurs.
L'invention ne présente pas les inconvénients mentionnés ci-dessus.

Exposé de l'invention

En effet l'invention concerne un procédé d'obtention d'au moins un paramètre simulé apte à caractériser, dans un repère de référence, un mouvement d'une structure articulée constituée d'une pluralité de segments articulés entre eux, au moins deux de ces segments étant muni, chacun, d'un capteur de mesure, caractérisé en ce que le procédé comprend :

- le calcul, à partir de tout ou partie de paramètres estimés d'état de mouvement descriptifs d'un mouvement de la structure articulée, d'un modèle mécanique de la structure articulée et d'un modèle de capteur de mesure, de données estimées de mesure, chaque donnée estimée de mesure étant une donnée représentative d'une mesure délivrée par un capteur, au moins une donnée estimée de mesure s'exprimant sous la forme d'une équation comprenant des termes qui combinent au moins un paramètre estimé d'état de mouvement d'un segment qui porte un premier capteur de mesure et au moins un paramètre estimé d'état de mouvement d'au moins un segment différent du segment qui porte le premier capteur de mesure (ces termes seront le plus souvent dénommés « termes croisés » dans la suite de la description),
- pour au moins deux capteurs de mesure différents, le calcul d'une différence entre une mesure délivrée par un capteur de mesure et la donnée estimée de mesure qui représente la mesure délivrée,
- un traitement mathématique global des données issues de la différence, le traitement mathématique global étant un traitement de type observateur apte à prendre en compte lesdits termes et délivrant au moins un écart estimé de paramètre estimé d'état de mouvement, et
- une sommation de l'écart estimé de paramètre estimé d'état de mouvement et du paramètre estimé d'état de mouvement qui lui correspond pour former un paramètre simulé.

L'invention concerne également un procédé de reproduction de mouvement de structure articulée à partir de paramètres simulés aptes à caractériser un mouvement d'une structure articulée, caractérisé en ce que les paramètres simulés sont obtenus par un procédé selon l'invention.

Un problème que résout le procédé de l'invention est celui de la reconstruction d'un mouvement présentant des phases rapides d'une structure articulée quelconque, par exemple un corps humain en mouvement, mouvement qui génère des accélérations non négligeables devant l'intensité de la gravité. De façon avantageuse, le procédé de l'invention permet la reconstruction d'un mouvement dans les cas où il est impossible de connaître le mouvement d'un capteur ou d'une quelconque partie d'un système sur lequel est positionné le capteur à partir des seules mesures délivrées par ce capteur.

Le procédé de l'invention est avantageusement un procédé à faible coût qui se passe de l'utilisation de gyromètres qui sont des appareils ayant un coût élevé.

Le procédé de l'invention utilise préférentiellement des accéléromètres et magnétomètres. Il comporte avantageusement un nombre N de capteurs choisi selon la nécessité du modèle articulé. Il n'y a donc pas nécessairement un capteur par segment du modèle articulé.

Brève description des figures

D'autres caractéristiques et avantages de l'invention apparaîtront à la lecture d'un mode de réalisation préférentiel fait en référence aux figures jointes parmi lesquelles :

- la figure 1 représente un système de mise en oeuvre du procédé de l'invention ;
- la figure 2 représente un exemple de corps articulé équipé de capteurs selon l'invention ;
- la figure 3 représente un organigramme de mise en oeuvre du procédé de l'invention selon un premier mode de réalisation ;
- la figure 4 représente un organigramme de mise en oeuvre du procédé de l'invention selon un deuxième mode de réalisation ;
- la figure 5 représente un exemple de corps articulé équipé de capteurs et dont le procédé de l'invention est apte à réaliser une capture de mouvement ;
- la figure 6 représente des mesures d'accélération délivrées pour le corps articulé représenté en figure 5 (cas où les capteurs sont des accéléromètres) ;
- les figures 7A-7D représentent des angles d'orientation estimés et de référence pour la capture du mouvement du corps représenté à titre d'exemple en figure 5 ;
- les figures 8A-8D représentent des vitesses angulaires estimées et de référence pour la capture du mouvement du corps représenté à titre d'exemple en figure 5 ;
- les figures 9A-9D représentent des accélérations angulaires estimées et de référence pour la capture du mouvement du corps représenté à titre d'exemple en figure 5 ;
- les figures 10A-10C représentent des translations estimées et de référence pour la capture du mouvement du corps représenté à titre d'exemple en figure 5.

Sur toutes les figures, les mêmes références désignent les mêmes éléments.

Description détaillée d'un mode de réalisation préférentiel de l'invention

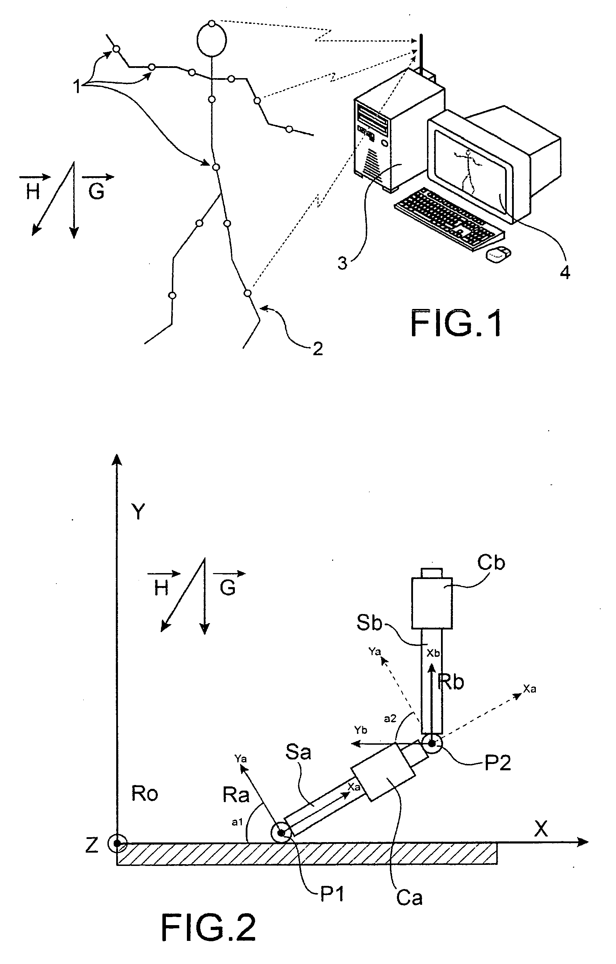

La figure 1 représente un système pour la mise en oeuvre du procédé de l'invention. Le système comprend un ensemble de capteurs 1 distribués sur une structure 2 dont on cherche à capturer tout ou partie du mouvement (par exemple un corps humain), un calculateur 3 et un dispositif d'affichage 4. Un champ de pesanteur G et un champ magnétique $H$ baignent l'espace dans lequel évolue la structure 2. Les capteurs 1 communiquent à distance avec le calculateur 3 et transmettent leurs données de mesures. Les données de mesures sont traitées dans le calculateur 3 à l'aide de modèles préalablement choisis et d'un procédé de traitement global qui détermine des paramètres de simulation aptes à caractériser tout ou partie du mouvement de la structure et/ou qui reconstruit tout ou partie du mouvement de la structure. Les capteurs 1 sont, par exemple, des accéléromètres et des magnétomètres.

Le procédé de l'invention se caractérise par l'utilisation conjointe de mesures délivrées par tout ou partie des capteurs 1, d'un modèle mécanique de la structure dont on souhaite capturer le mouvement, d'un modèle de capteur et d'un traitement global des données de mesure délivrées par les capteurs.

Il est avantageusement possible d'utiliser plusieurs modèles mécaniques différents de structure et/ou plusieurs modèles différents de capteur. Selon le mode de réalisation préférentiel de l'invention, le choix est fait de modèles dynamiques de structure et de modèles dynamiques de capteur. De tels modèles dynamiques sont plus proches de la réalité physique. Ils permettent non seulement de trouver avec plus de précision les inconnues que l'on cherche, mais également de trouver plus d'inconnues. Des modèles plus simples que les modèles dynamiques peuvent également être utilisés dans le cadre de l'invention, particulièrement, par exemple, pour la capture de mouvements lents.

Le procédé de l'invention conduit à reconstruire un état de la structure observée (corps humain, animal, robot.). Par « état » de la structure observée, il faut entendre, par exemple, la position ou la vitesse ou l'accélération de la structure, ou des paramètres du modèle mécanique de la structure, ou une quelconque combinaison de tout ou partie de ces différents éléments. Ces états que le procédé de l'invention permet de reconstruire seront le plus souvent mentionnés dans la suite de la description sous l'appellation « paramètres d'état du mouvement ».

Le procédé de traitement de l'invention s'appuie sur l'utilisation conjointe de trois éléments essentiels. Un premier élément est donné par un modèle mécanique de la structure. Par « modèle mécanique de la structure » il faut entendre un modèle géométrique ou un modèle cinématique ou un modèle dynamique de la structure articulée à observer ou une quelconque combinaison de ces trois modèles. Le modèle mécanique permet de relier l'état de chaque segment du modèle à l'état global de la structure (en tenant compte, par exemple, de la composition des vitesses et des accélérations si vitesse et accélération font partie de l'état global). Le modèle mécanique peut être composé d'un certain nombre de paramètres connus ou non, tels que, par exemple, les longueurs des segments qui constituent la structure articulée, les masses des différents éléments constitutifs de la structure, les propriétés inertielles de ces différents éléments, etc. De façon générale, le modèle mécanique intégrera des particularités propres à la structure de façon à limiter les paramètres obtenus pour le mouvement aux seules valeurs qui ont un sens physique. Par exemple, dans le cas du corps humain, l'existence de la butée articulaire du coude (qui ne peut pas se retourner) est préférentiellement intégrée au modèle.

Le deuxième élément est le modèle de capteur. Le modèle du capteur est une fonction qui représente les différentes données de mesure du capteur en fonction de différents paramètres qui caractérisent le capteur dans un repère de référence (orientation, position, vitesse, accélération, etc.). Selon le mode de réalisation préférentiel de l'invention, les capteurs sont des accéléromètres et des magnétomètres. Pour les accéléromètres, le modèle de capteur donnera en conséquence une estimation de la mesure de l'accélération en fonction des paramètres choisis. Pour les magnétomètres, c'est une estimation de la mesure du champ magnétique en fonction des paramètres choisis qui sera donnée.

D'autres types de capteurs peuvent être utilisés dans le cadre de l'invention, soit pour s'ajouter aux accéléromètres et magnétomètres, soit pour se substituer en tout ou partie à eux. Le choix des capteurs dépendra du type de mouvement que l'on désire capter. On choisira au moins l'un des capteurs parmi les accéléromètres, les magnétomètres, les gyromètres, les capteurs de force, les goniomètres et les capteurs de GPS (GPS pour « Global Positioning System »).

Le modèle mécanique de la structure et le modèle de capteur peuvent être fusionnés dans un modèle unique. Ce modèle unique associe alors à chaque état global du système une estimation de ce que mesure chaque capteur (mesure estimée).

L'association du modèle mécanique de la structure et du modèle de capteur permet de faire apparaître des termes «croisés» dans l'expression des estimations de mesure. Les termes dits « croisés » sont, lorsque l'on considère un capteur d'indice « i » porté par un segment d'indice « i », des termes qui font intervenir des paramètres relatifs à au moins un segment d'indice « j » différent de « i ». Le capteur d'indice « i » apporte alors de l'information sur le mouvement des segments d'indice « i » et « j », information qui apparaît dans les termes croisés.

La figure 2 illustre l'influence des termes croisés. La figure 2 représente deux segments articulés Sa et Sb susceptibles de se déplacer dans un repère de référence $R_0$ (X, Y, Z). Un champ de pesanteur $\vec{G}$ et un champ magnétique $\vec{H}$ baignent le repère $R_0$. Le segment Sa est équipé d'un capteur Ca, par exemple un accéléromètre triaxe, et le segment Sb est équipé d'un capteur Cb, par exemple un accéléromètre triaxe. Un repère $R_a$ (Xa, Ya, Za) est lié au segment Sa et un repère $R_b$ (Xb, Yb, Zb) est lié au segment Sb. Un élément d'articulation P1 fixé sur le plan Y=0 autorise le segment Sa à pivoter dans le plan (X, Y) et un élément d'articulation P2 reliant les segment Sa et Sb autorise le segment Sb à pivoter, dans le plan (X, Y), autour du segment Sa. Un angle a1 traduit le pivotement du segment Sa dans le repère $R_0$ et un angle a2 traduit le pivotement du segment Sb dans le repère $R_a$. Il apparaît ainsi clairement que la mesure du capteur Cb est influencée non seulement par l'angle a2 mais aussi par l'angle al. Dans l'expression de la mesure du capteur Cb, tous les termes contenant l'angle al, la vitesse angulaire dal/dt et l'accélération angulaire $d^2a1/dt^2$ sont des termes croisés.

Le troisième élément est un procédé de traitement qui, à partir des données de modèles (modèle de structure plus modèle de capteur ou modèle unique fusionné structure/capteur) recherche l'ensemble des inconnues en même temps. Ce procédé minimise la distance qui sépare les estimations de mesure calculées à partir du modèle et les mesures réelles. Les mesures réelles peuvent être pré-enregistrées ou enregistrées en continu. Elles peuvent être complètes ou lacunaires. Le procédé de traitement est un procédé mathématique global de type observateur qui est connu en soi. Selon le mode de réalisation préférentiel de l'invention, le procédé de traitement est le filtrage de Kalman étendu. Tout autre procédé de traitement global de données peut également être utilisé tel que, par exemple, les procédés d'optimisation avec contraintes ou sans contraintes, le filtrage particulaire, les procédés de type observateur à horizon glissant ou, plus généralement, tout procédé de type observateur linéaire ou non-linéaire. L'utilisation d'un procédé de traitement global des données (données de modélisation et données de mesures) est nécessaire pour prendre en compte les termes croisés mentionnés précédemment.

Dans les méthodes de l'art antérieur mentionnées ci-dessus, le modèle de capteur est un modèle approché et il est nécessaire de fournir une information supplémentaire, comme par exemple une mesure de gyromètre, pour compléter ce modèle. Avec ce modèle approché complété par cette information supplémentaire, on peut déterminer l'orientation du capteur et donc l'orientation du segment qui porte le capteur (avec les erreurs liées aux approximations). Il est ici important de constater que le traitement des données mesurées par un capteur seul ne pose alors pas de problème car, dans ce cas, l'information manquante (l'accélération liée au mouvement) est fournie par un autre type de mesure (mais pas par l'accéléromètre ou le magnétomètre). Quelle que soit la structure articulée et les types de liaison qui existent entre les segments, le mouvement de la chaîne articulée peut ainsi être trouvé.

Dans le cas de l'invention, sans réaliser d'approximation sur le modèle et sans utiliser d'autres types de mesures, la modélisation est poussée de façon à faire apparaître des termes croisés. Les termes croisés contiennent des informations supplémentaires nécessaires à la résolution du problème. Les termes croisés n'étant présents que lorsque plusieurs capteurs sont présents, le procédé de l'invention ne permet donc pas de déterminer correctement l'orientation d'un capteur pris isolément. Les données relatives aux termes croisés dépendent aussi du type d'articulation entre les segments.

Du fait de la complexité de certains systèmes à étudier, le procédé de l'invention prévoit un perfectionnement sous la forme de tests dits « tests d'observabilité ». Les tests d'observabilité permettent de déterminer si la nature des capteurs et leur géométrie de distribution sur la structure permettent de conduire à une reconstruction correcte du mouvement articulé. Pour des capteurs et une géométrie de distribution choisis, en s'appuyant sur le modèle mécanique et sur le modèle de capteur, on établit alors, par des procédés mathématiques standards, si les informations obtenues pour cette configuration de capteurs et de géométrie de distribution permettent de connaître les paramètres du mouvement que l'on veut déterminer. Un exemple de procédé mathématique standard est donné dans les pages qui suivent.

Avantageusement, le procédé de traitement de l'invention est suffisamment robuste pour permettre de ne pas avoir à placer un capteur sur chaque segment alors même que la capture du mouvement obtenue par le procédé de l'invention conduit à une détermination du mouvement de tous les segments de la structure.

Non seulement le procédé de l'invention ne nécessite pas l'utilisation de mesures supplémentaires mais il ne fait pas d'approximations sur le modèle, ce qui conduit avantageusement à éviter l'apparition d'erreurs dans l'estimation du mouvement.

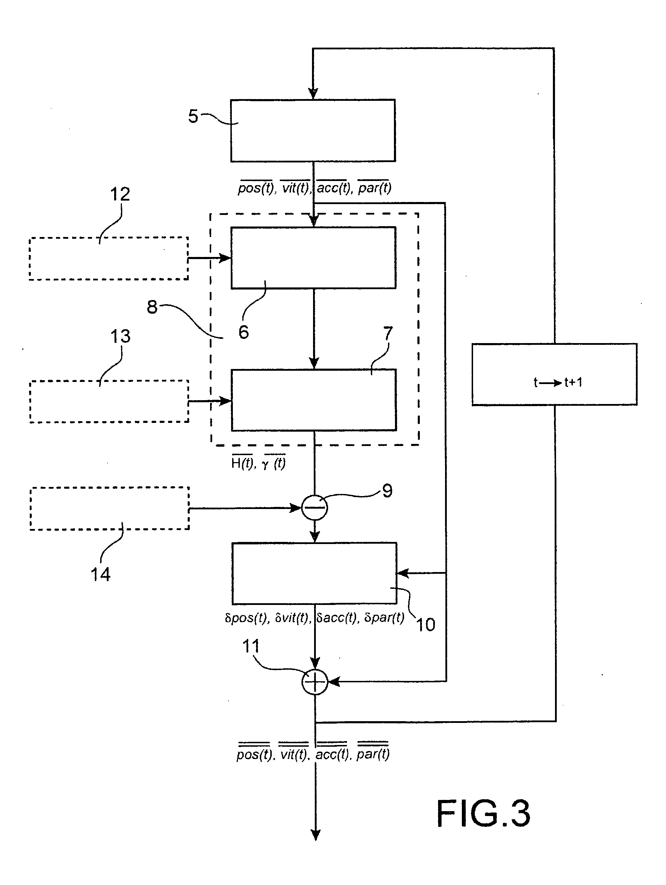

La figure 3 représente un premier organigramme de mise en oeuvre du procédé de l'invention. Un modèle de prédiction 5 est tout d'abord établi. Le modèle de prédiction est le modèle d'évolution des inconnues (état et/ou paramètres) observées entre des instants successifs t-1 et t. Le modèle de prédiction est ainsi une fonction qui donne une estimation de l'état et/ou des paramètres qui définissent le système à l'instant t en fonction de la valeur de l'état et/ou des paramètres à l'instant t-1 . L'état du système est défini, à un instant t, par les paramètres d'état du mouvement que sont la position pos(t), la vitesse vit(t), l'accélération acc(t) et les paramètres par(t) définis précédemment comme paramètres du modèle mécanique ou combinaison des paramètres précédents. Il vient alors :

$$[pos(t), vit(t), acc(t), par(t)] = f [pos(t-1), vit(t-1), acc(t-1), par(t-1)]$$

En sortie du modèle de prédiction 5, on a donc un ensemble de paramètres estimés d'état de mouvement descriptifs du mouvement, de la structure articulée *pos*(*t*), *vit*(*t*), *acc*(*t*), *par*(*t*). Ces paramètres estimés sont alors entrés dans le modèle mécanique 6 de la structure. Selon un perfectionnement de l'invention, le modèle mécanique 6 est complété par des données 12 dites « données de connaissances a priori de la structure » qui décrivent la structure (par exemple dimensions et masse des segments, matrice d'inertie, etc.) ou qui traduisent tout ou partie de mouvements réalisés par la structure (informations de position et/ou de vitesse et/ou d'accélération). Le modèle mécanique 6 délivre des données d'orientation, de position, de vitesse et d'accélération des capteurs qui sont entrées dans le modèle de capteur 7. Selon un autre perfectionnement de l'invention, le modèle de capteur 7 est complété, par des données 13 dites « données de connaissance a priori des capteurs » qui décrivent des propriétés des capteurs (par exemple sensibilité, offset, dérive, etc.) ou qui traduisent tout ou partie de mouvements réalisés par les capteurs. Le modèle de capteur 7 délivre des données estimées qui sont représentatives de la mesure des capteurs lorsque ceux-ci ont l'orientation et/ou la position et/ou la vitesse et/ou l'accélération prévues par le modèle. Comme cela a été mentionné précédemment le modèle mécanique et le modèle de capteur peuvent être fusionnés dans un modèle unique. Ce modèle unique est référencé 8 sur la figure 3. Les données estimées délivrées par le modèle de capteur 7 ou par le modèle unique 8 sont, par exemple, une estimation de mesure de champ magnétique à l'instant t *H(t)* et une estimation de mesure d'accélération à l'instant t $\gamma$(*t*). Ces estimations de mesure sont alors comparées dans un module de comparaison 9 aux mesures réelles délivrées par les capteurs. Le résultat de la comparaison établit la différence entre les grandeurs comparées. Cette différence est alors entrée dans un module 10 de traitement global de type observateur mathématique tel que, par exemple, un module de filtrage de Kalman étendu, un module d'optimisation avec ou sans contraintes, un module de filtrage particulaire, un module de traitement de type observateur à horizon glissant, etc. Le module 10 délivre des écarts estimés $\delta$pos(*t*), $\delta$vit(*t*), $\delta$acc(*t*), $\delta$par(*t*) des paramètres estimés d'état de mouvement, écarts destinés à corriger les différents paramètres estimés qui leur correspondent. Un opérateur de sommation 11 reçoit alors sur une première série d'entrées les données estimées *pos*(*t*), *vit*(*t*), *acc*(*t*), *par*(*t*) et, sur une deuxième série d'entrées, les écarts estimés $\delta$pos(*t*), $\delta$vit(*t*), $\delta$acc(*t*), $\delta$par(*t*) et délivre en sortie les données simulées recherchées *pos*(*t*), *vit*(*t*), *acc*(*t*), *par*(*t*) qui permettent de reconstituer le mouvement de la structure.

Il vient :

$$\overline{\overline{pos(t)}} \;=\; \overline{pos(t)} \;+\; \delta\mathrm{pos(t)},$$

$$\overline{\overline{vit(t)}} \;=\; \overline{vit(t)} \;+\; \delta\mathrm{vit(t)},$$

$$\overline{\overline{acc(t)}} \;=\; \overline{acc(t)} \;+\; \delta\mathrm{acc(t)},$$

$$\overline{\overline{\mathrm{par(t)}}} \;=\; \overline{par(t)} \;\div\; \delta\mathrm{par(t)}$$

Les données *pos*(*t*), *vit*(*t*), *acc*(*t*), *par*(*t*) sont alors transmises au modèle de prédiction 5 pour devenir de nouveaux paramètres estimés à un instant ultérieur.

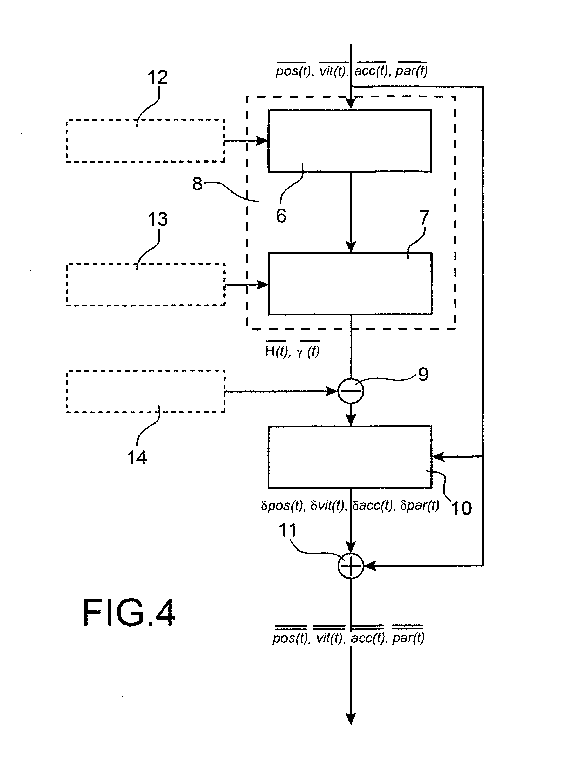

La figure 4 représente un organigramme de mise en oeuvre du procédé de l'invention selon un deuxième mode de réalisation. Selon le deuxième mode de réalisation, il n'y a pas de modèle de prédiction et les paramètres *pos*(*t-1*), *vit*(*t-1*), *acc*(*t-1*), *par*(*t-1*) estimés sont entrés directement dans le modèle mécanique 6. Il est alors avantageusement possible d'entrer, au coup par coup, des données d'estimation supplémentaires 12 dans le modèle mécanique. Le procédé est par ailleurs identique au procédé décrit dans le premier mode de réalisation.

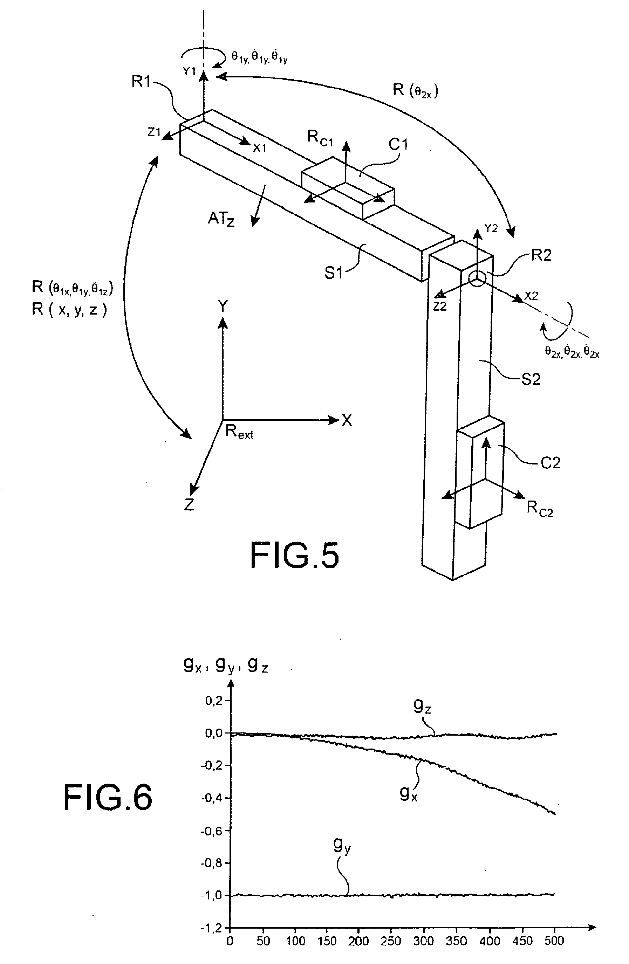

Un exemple particulier de capture de mouvement selon le procédé de l'invention va maintenant être décrit en référence à la figure 5. La figure 5 représente, dans un repère de référence R$_{ext}$ (X, Y, Z), une structure articulée constituée de deux segments S1 et S2 liés entre eux par une liaison rotoïde (1 degré de liberté). Un repère R1 (x1, y1, z1) est lié au segment S1 et un repère R2 (x2, y2, z2) est lié au segment S2. Un capteur C1 est fixé sur le segment S1 et un capteur C2 est fixé sur le segment S2. Chaque capteur C1, C2 contient un triaxe accéléromètre et un triaxe magnétomètre. Le système ainsi décrit présente un degré de liberté pour l'articulation entre les segments S1 et S2 et six degrés de liberté, en rotation et en translation, pour, l'ensemble de la structure constituée par les deux segments S1, S2. Ce sont donc sept inconnues qu'il faut déterminer.

Une simulation de mouvement de la structure est donnée comme suit : le segment S2 tourne autour de l'axe vertical y2 du repère R2 avec une accélération angulaire constante et le segment S1 tourne autour de l'axe de rotation x1 du repère R1 avec une accélération angulaire également constante. L'ensemble du système réalise une translation définie par une accélération $AT_z$.

Pour un capteur C, les estimations de mesure d'accélération $\gamma_c$ et de champ magnétique $H_C$ (équations du modèle) sont données, dans le repère du capteur C, par les équations (1) ci-dessous :

$$
\begin{cases}
\overline{\vec{\gamma}}_C = {}^C R_{ext} \times \left( \vec{G} - \vec{a}_c \right) \\
\overline{\vec{H}}_C = {}^C R_{ext} \times \left( \vec{H} \right)
\end{cases}
\qquad (1)
$$

où :

- les vecteurs $\vec{a}_c$, $\vec{G}$ et $\vec{H}$ sont, respectivement, l'accélération du capteur, l'accélération de la pesanteur et le champ magnétique extérieur exprimés dans le repère extérieur $R_{ext}$, et
- ${}^C R_{ext}$ est la matrice de rotation entre le repère lié au capteur et le repère de référence $R_{ext}$.

La manière dont la rotation et la translation entre le repère lié au capteur et le repère extérieur sont exprimées est l'expression du modèle géométrique de la chaîne articulée. La rotation ${}^C R_{ext}$ se décompose en conséquence en fonction des paramètres de la chaîne articulée. On obtient alors, pour les capteurs respectifs C1 et C2, les estimations de mesure suivantes rassemblées sous la référence (2) :

$$
\begin{cases}
\overline{\vec{\gamma}}_{C1} = {}^C R_0(\theta_1) \times \left( \vec{G} - \vec{a}_{C1} \right) \\
\overline{\vec{H}}_{C1} = {}^{C_1} R_0(\theta_1) \times \left( \vec{H} \right) \\
\overline{\vec{\gamma}}_{C2} = {}^{C_2} R_1(\theta_{2x}) \times {}^1 R_0(\theta_1) \times \left( \vec{G} - \vec{a}_{C2} \right) \\
\overline{\vec{H}}_{C2} = {}^{C_2} R_1(\theta_{2x}) \times {}^1 R_0(\theta_1) \times \left( \vec{H} \right)
\end{cases}
\qquad (2)
$$

où :

- les termes $\gamma_{C1}$, $H_{C1}$ sont les estimations de mesure d'accélération et de champ magnétique dans le repère R1,
- les termes $\gamma_{C2}$, $H_{C2}$ sont les estimations de mesure d'accélération et de champ magnétique dans le repère R2, et
- les vecteurs $\vec{\theta 1}$ et $\vec{\theta 2}$ sont, respectivement, le vecteur de rotation du segment S1 dans le repère de $R_{ext}$ et le vecteur de rotation du segment S2 autour du segment S1.

Le vecteur $\vec{\theta 1}$ se décompose en trois angles de rotation $\theta 1_x$, $\theta 1_y$, $\theta 1_z$ selon les axes X, Y et Z du repère $R_{ext}$.

Les mesures délivrées par un capteur C sont exprimées dans le repère $R_C$ du capteur. Les expressions des accélérations $\vec{a}_{c1}$ et $\vec{a}_{c2}$ qui sont mesurées par les capteurs respectifs C1 et C2 sont ainsi les suivantes :

$$
\begin{aligned}
\vec{a}_{C1} &= \vec{A}_T + \ddot{\vec{\theta}}_1 \wedge \overrightarrow{O_1 C_1} + \dot{\vec{\theta}}_1 \wedge \dot{\vec{\theta}}_1 \wedge \overrightarrow{O_1 C_1} \\
\vec{a}_{C2} &= \vec{A}_T + \ddot{\vec{\theta}}_1 \wedge \overrightarrow{O_1 C_2} + \dot{\vec{\theta}}_1 \wedge \dot{\vec{\theta}}_1 \wedge \overrightarrow{O_1 C_2} \qquad (3) \\
&\quad + \ddot{\vec{\theta}}_{2x} \wedge \overrightarrow{O_2 C_2} + \dot{\vec{\theta}}_{2x} \wedge \dot{\vec{\theta}}_{2x} \wedge \overrightarrow{O_2 C_2}
\end{aligned}
$$

où le symbole « A » représente l'opération « produit vectoriel » et :

- le terme $\vec{A}_T$ représente l'accélération de translation qui concerne l'ensemble de la structure articulée,
- les termes $\dot{\vec{\theta}}$ et $\ddot{\vec{\theta}}$ représentent, respectivement, la dérivée première et la dérivée seconde de la grandeur $\vec{\theta}$ par

rapport au temps, et

- $\overrightarrow{0_i C_j}$   le vecteur position du capteur $C_j$ dans le repère Ri (i=1,2).

Dans l'exemple choisi, les termes croisés, qui sont un élément essentiel du procédé de l'invention, sont les termes qui comprennent les variables $\vec{\theta}_1, \dot{\vec{\theta}}_1, \ddot{\vec{\theta}}_1$ et $A_T$ pour l'expression de la mesure du capteur 2. En cherchant tous les paramètres du mouvement en même temps, donc en utilisant les deux capteurs C1 et C2 en même temps, on s'autorise ainsi à récupérer de l'information sur les paramètres du segment S1 à l'aide de mesures provenant du capteur 2.

Un filtre de Kalman étendu est utilisé pour rechercher les inconnues du système. Un vecteur I est formé avec les inconnues, lequel vecteur est composé de trois vecteurs élémentaires, à savoir un vecteur position, un vecteur vitesse et un vecteur accélération.

Le vecteur position est constitué des positions de translation dans l'espace (les trois degrés de liberté de translation $T_x$, $T_y$, $T_z$, du segment S1) et des positions angulaires (les trois degrés de liberté de rotation $\theta_{1x}$, $\theta_{1y}$, $\theta_{1z}$, du segment S1 plus le degré de liberté de rotation $\theta_{2x}$ de l'articulation).

Le vecteur vitesse est la dérivée première par rapport au temps du vecteur position. Il comprend donc les vitesses de translation et les vitesses angulaires.

Le vecteur accélération est la dérivée seconde par rapport au temps du vecteur position. Il est donc constitué des accélérations de translation (les variables $A_{Tx}$, $A_{Ty}$ et $A_{Tz}$ de l'équation 2) et des accélérations angulaires.

Il vient :

$$\vec{I} = \left[ T_x, T_y, T_z, \theta_{1x}, \theta_{1y}, \theta_{1z}, \theta_{2x}, V_{Tx}, V_{Ty}, V_{Tz}, \dot{\theta}_{1x}, \dot{\theta}_{1y}, \dot{\theta}_{1z}, \ddot{\theta}_{2x}, A_{Tx}, A_{Ty}, A_{Tz}, \ddot{\theta}_{1x}, \ddot{\theta}_{1y}, \ddot{\theta}_{1z}, \ddot{\theta}_{2x} \right]$$
$$(4)$$

Ce vecteur peut être mis sous la forme $\vec{I}=[\overrightarrow{pos}, \overrightarrow{vit}, \overrightarrow{acc}]$ ou $\overrightarrow{pos}$ est un vecteur position, $\overrightarrow{vit}$ un vecteur vitesse et $\overrightarrow{acc}$ un vecteur accélération. Il faut noter qu'aucune des équations (1) et (2) mentionnées ci-dessus et qui décrivent le modèle n'est fonction des positions de translation ou des vitesses de translation. Ces deux grandeurs n'influent aucunement sur les mesures et ne sont donc pas nécessaires (et non observables par le filtre de Kalman). Les garder présente toutefois l'avantage de simplifier l'écriture de la matrice d'évolution de l'état du système.

La dynamique du système s'écrit alors à l'aide du système d'équations (5) ci-après :

$$\begin{cases} I_k = A.I_{k-1} + \omega_{k-1} \\ m_k = h(I_k) + t_k \end{cases} \qquad (5)$$

où $k$ représente l'indice de l'itération courante, I l'état du système, A la matrice d'évolution de l'état du système, $\omega$ le bruit de procédé, m la mesure, h la fonction de mesure et t le bruit de mesure.

En référence à la figure 3 décrite ci-dessus, les données qui constituent la matrice A sont entrées dans le modèle de prédiction 5. En référence à la figure 4, la matrice A est la matrice Identité et n'est en conséquence pas représentée dans l'organigramme.

La matrice A est ici définie de la manière suivante, $\Delta t$ étant la durée qui sépare l'instant $t_k$ de l'instant $t_{k+1}$ :

$$A = \begin{pmatrix} 1 & \Delta t & 0{,}5\Delta t^2 \\ 0 & 1 & \Delta t \\ 0 & 0 & 1 \end{pmatrix}$$

La fonction h mentionnée ci-dessus permet de calculer une estimation des mesures de chaque capteur. Cette fonction s'écrit :

$$\left[ \overline{\gamma}_{C1}, \overline{H}_{C1}, \overline{\gamma}_{C2}, \overline{H}_{C2} \right] = h(pos, vit, acc)$$

Le filtre de Kalman fonctionnant sur des systèmes linéaires, c'est son extension à des systèmes non-linéaires qui est utilisé dans le cadre de l'invention (filtrage de Kalman étendu). Pour cela on calcule la jacobienne de la fonction h du système écrit plus haut. Les équations du filtre de Kalman étendu trouvent alors l'itéré suivant qui minimise l'erreur entre l'estimation de la mesure et la mesure réelle en prenant en compte toutes les informations disponibles.

Les figures 6, 7A-7D, 8A-8D, 9A-9D représentent des résultats obtenus, pour le système représenté en figure 5, par le procédé de l'invention.

Les valeurs des accélérations estimées du mouvement $A_{Tx}$, $\ddot{\theta}_{1y}$, $\ddot{\theta}_{2x}$ et du pas de temps $\Delta t$ sont les suivantes (les valeurs de position et de vitesse sont nulles au début du mouvement) :

$$A_{T^x} = 0.1 \; m.s^{-2}$$

$$\ddot{\theta}_{1y} = 1 \; rad.s^{-2}$$

$$\ddot{\theta}_{2x} = 0.7 \; rad.s^{-2}$$

$$\Delta t = 0.01 \; s$$

Par ailleurs, à l'ensemble des estimations de mesures est ajouté un bruit gaussien de moyenne nulle et de variance 0.05.

Il est maintenant possible de réaliser un test d'observabilité pour vérifier que la nature des capteurs et leur géométrie de distribution rend possible une reconstruction correcte du mouvement articulé. Un des procédés mathématiques permettant de réaliser ce test est décrit ci-après.

Soit $J_h$(pos, vit, acc) la matrice jacobienne de la fonction de mesure h(pos, vit, acc). On construit alors la matrice M telle que :

$$M = \begin{bmatrix} H \\ HA \\ HA^2 \\ . \\ . \\ . \\ HA^{n-1} \end{bmatrix}$$

où n est la dimension de la matrice A.

Si la matrice M est de rang plein, alors il est possible d'affirmer que la nature des capteurs et leur géométrie de distribution rend possible une reconstruction correcte du mouvement articulé.

Le capteur 1 est un accéléromètre. La figure 6 représente les courbes des mesures des composantes, dans le repère R1, du vecteur composé de l'accélération de la pesanteur $\vec{g}$ et de l'accélération du mouvement délivrées par le capteur 1, en fonction des incrémentations du pas temporel $\Delta t$. La courbe $g_x$ représente la composante d'accélération selon X1, la courbe gy représente la composante d'accélération selon Y1 et la courbe $g_z$ la composante d'accélération selon Z1.

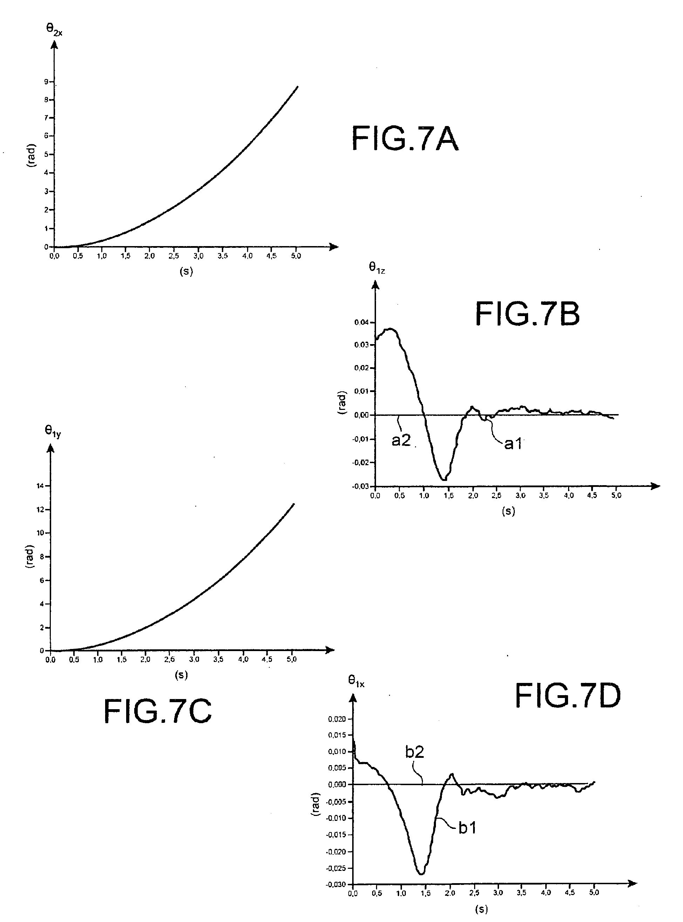

Chacune des figures 7A-7D, 8A-8D et 9A-9D représente des courbes de comparaison, en fonction du temps, entre des valeurs délivrées à l'issue du procédé de l'invention (valeurs simulées délivrées) et des valeurs théoriques (valeurs de référence) qui leur correspondent.

La figure 7A représente l'évolution en fonction du temps de la valeur estimée délivrée (courbe a1) et de la valeur de référence (courbe a2) de l'angle $\theta_{2x}$. Une seule courbe apparaît sur la figure 7A du fait de l'accord quasiment parfait entre mesures et estimations de mesures.

La figure 7B représente l'évolution en fonction du temps de la valeur estimée délivrée (courbe b1) et de la valeur de référence (courbe b2) de l'angle $\theta_{1z}$.

La figure 7C représente l'évolution en fonction du temps de la valeur estimée délivrée (courbe c1) et de la valeur de référence (courbe c2) de l'angle $\theta_{1y}$. Une seule courbe apparaît sur la figure 7C du fait de l'accord quasiment parfait entre mesures et estimations de mesures.

La figure 7D représente l'évolution en fonction du temps de la valeur estimée délivrée (courbe d1) et de la valeur de référence (courbe d2) de l'angle $\theta_{1x}$ en fonction du temps.

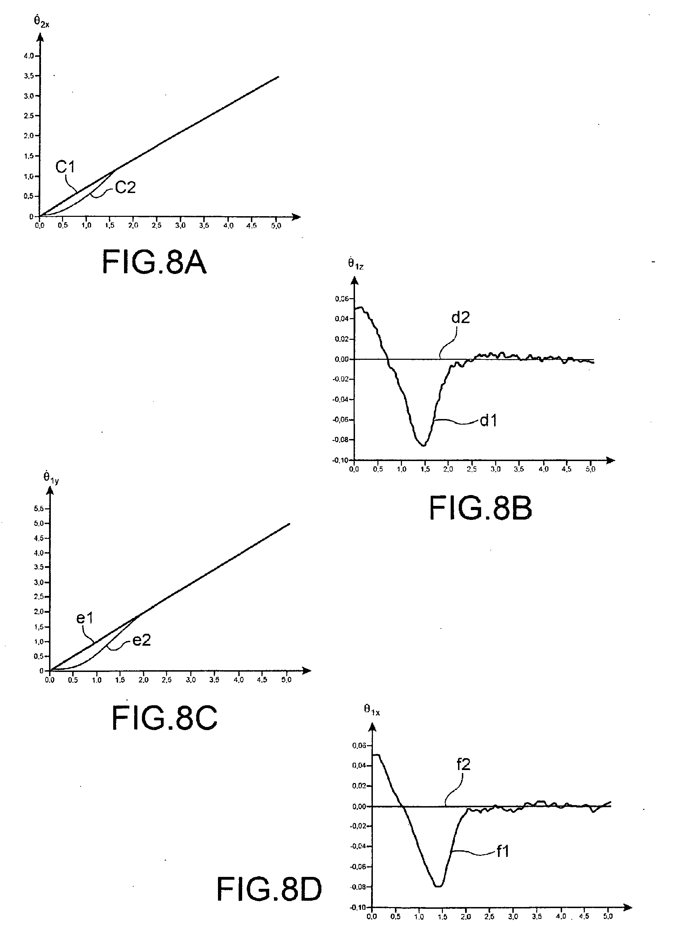

La figure 8A représente l'évolution en fonction du temps de la valeur estimée délivrée (courbe e1) et de la valeur de référence (courbe e2) de la vitesse angulaire $\dot{\theta}_{2x}$.

La figure 8B représente l'évolution en fonction du temps de la valeur estimée délivrée (courbe f1) et de la valeur de référence (courbe f2) de la vitesse angulaire $\dot{\theta}_{1z}$.

La figure 8C représente l'évolution en fonction du temps de la valeur estimée délivrée (courbe g1) et de la valeur de référence (courbe g2) de la vitesse angulaire $\dot{\theta}_{1y}$.

La figure 8D représente l'évolution en fonction du temps de la valeur estimée délivrée (courbe h1) et de la valeur de référence (courbe h2) de la vitesse angulaire $\dot{\theta}_{1x}$.

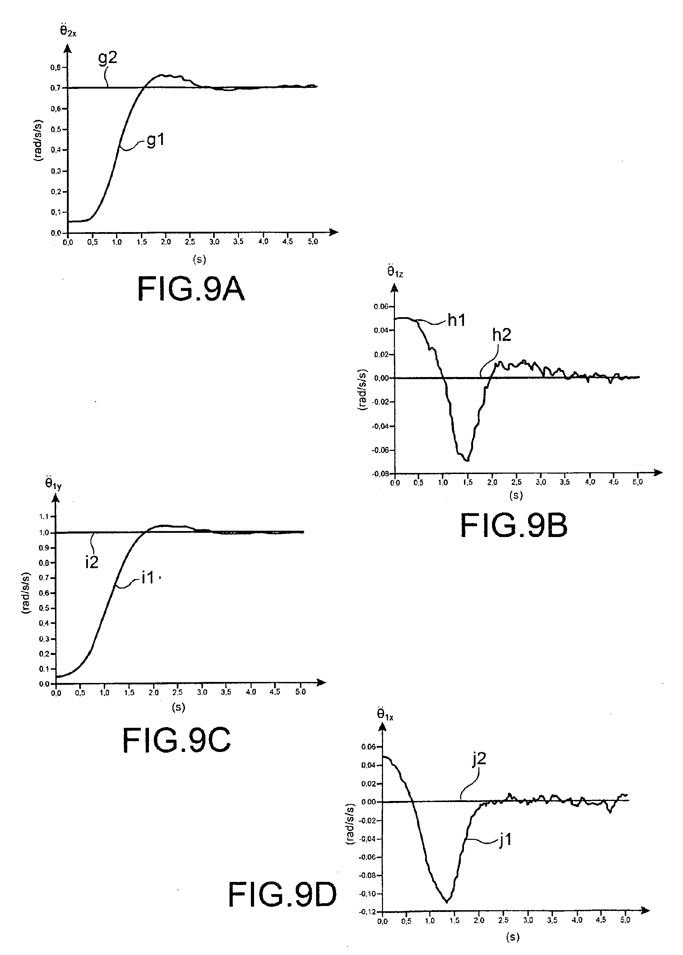

La figure 9A représente l'évolution en fonction du temps de la valeur estimée délivrée (courbe i1) et de la valeur de référence (courbe i2) de l'accélération angulaire $\ddot{\theta}_{2x}$.

La figure 9B représente l'évolution en fonction du temps de la valeur estimée délivrée (courbe j1) et de la valeur de référence (courbe j2) de l'accélération angulaire $\ddot{\theta}_{1z}$.

La figure 9C représente l'évolution en fonction du temps de la valeur estimée délivrée (courbe k1) et de la valeur de référence (courbe k2) de l'accélération angulaire $\ddot{\theta}_{1y}$.

La figure 9D représente l'évolution en fonction du temps de la valeur estimée délivrée (courbe 11) et de la valeur de référence (courbe 12) de l'accélération angulaire $\ddot{\theta}_{1x}$.

Comme cela apparaît clairement sur l'ensemble des figures 6, 7A-7D, 8A-8D et 9A-9D, les valeurs estimées délivrées par le procédé de l'invention sont très proches des valeurs théoriques attendues, ce qui prouve la pertinence du procédé de simulation de l'invention.

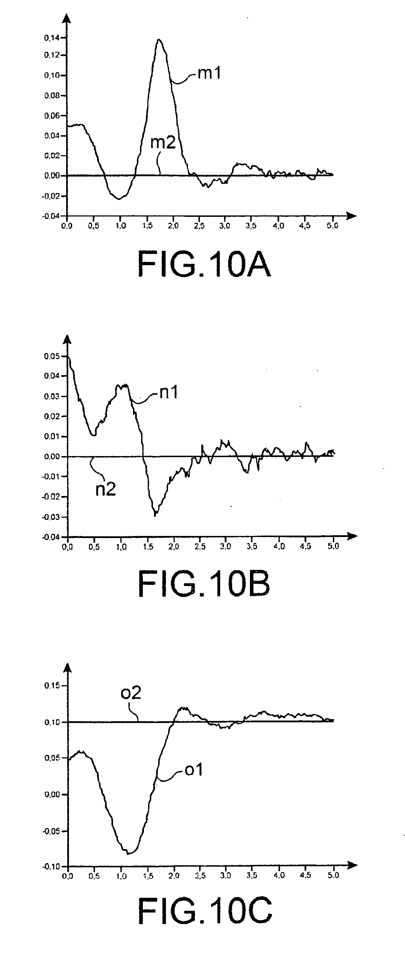

De façon analogue, sur les figures 10A, 10B et 10C, on observe l'évolution en fonction du temps des valeurs estimées délivrées (courbes respectives m1, n1, o1) et des valeurs de référence (courbes respectives m2, n2, o2) des accélérations de translation ATx, ATy et ATz.

## Revendications

**1.** Procédé de reproduction de mouvement, dans un repère de référence ($R_{ext}$), d'une structure articulée constituée d'une pluralité de segments articulés entre eux (S1, S2), au moins deux des segments étant muni, chacun, d'un capteur de mesure (C1, C2), le procédé comprenant une détermination d'au moins un paramètre simulé $\overline{(pos(t)}$ , $\overline{vit(t)}$ , $\overline{acc(t)}$ , $\overline{par(t))}$ apte à représenter un mouvement de la structure, **caractérisé en ce que** la détermination du paramètre simulé comprend :

- un calcul, à partir de tout ou partie de paramètres estimés d'état de mouvement $\overline{(pos(t)}, \overline{vit(t)}, \overline{acc(t)}, \overline{par(t))}$ descriptifs d'un mouvement de la structure articulée, d'un modèle mécanique (6) de la structure articulée et d'un modèle de capteur de mesure (7), de données estimées de mesure $(\overline{H(t)}, \overline{\gamma(t)})$, chaque donnée estimée de mesure étant une donnée représentative d'une mesure délivrée par un capteur, au moins une donnée estimée de mesure s'exprimant sous la forme d'une équation comprenant des termes qui combinent au moins un paramètre estimé d'état de mouvement d'un segment qui porte un premier capteur de mesure et au moins un paramètre estimé d'état de mouvement d'au moins un segment différent du segment qui porte le premier capteur de mesure,

- pour au moins deux capteurs de mesure différents, un calcul d'une différence (9) entre une mesure délivrée par le capteur de mesure et la donnée estimée de mesure qui représente la mesure délivrée,

- un traitement mathématique global des données issues de la différence, le traitement global étant un traitement de type observateur (10) apte à prendre en compte lesdits termes et délivrant au moins un écart estimé ($\delta pos(t)$, $\delta vit(s)$, $\delta acc(t)$, $\delta par(t)$) de paramètre estimé d'état de mouvement, et

- une sommation (11) de l'écart estimé de paramètre estimé d'état de mouvement et du paramètre estimé d'état de mouvement qui lui correspond pour former le paramètre simulé.

**2.** Procédé selon la revendication 1 dans lequel les paramètres estimés d'état de mouvement sont délivrés par un modèle de prédiction (5) qui modélise l'évolution de chaque paramètre d'état de mouvement entre deux instants successifs.

**3.** Procédé selon la revendication 1 ou 2 dans lequel le modèle mécanique (6) est complété par des données de connaissances a priori de la structure (12).

**4.** Procédé selon l'une quelconque des revendications 1 à 3 dans lequel le modèle de capteur de mesure (7) est complété par des données de connaissances a priori des capteurs (13).

**5.** Procédé selon l'une quelconque des revendications précédentes, dans lequel le traitement mathématique global de type observateur est un filtrage de Kalman étendu ou une optimisation avec ou sans contraintes ou un filtrage particulier ou un traitement de type observateur à horizon glissant.

**6.** Procédé selon l'une quelconque des revendications précédentes qui comprend, en outre, des tests préliminaires d'observabilité pour déterminer si les capteurs de mesures sont distribués sur les segments articulés de telle sorte que le paramètre simulé puisse être obtenu.

**7.** Procédé selon l'une quelconque des revendications précédentes dans lequel au moins un capteur de mesure est choisi parmi un accéléromètre, un magnétomètre, un gyromètre, un capteur de force, un goniomètre, un capteur de GPS.

**8.** Procédé selon l'une quelconque des revendications précédentes dans lequel le modèle mécanique de la structure articulée et le modèle de capteur sont des modèles dynamiques.

**9.** Procédé selon l'une quelconque des revendications précédentes dans lequel le modèle mécanique de la structure articulée et le modèle mécanique de capteur sont fusionnés dans un modèle unique qui associe une estimation de mesure de capteur à un état global du système formé de la structure articulée et des capteurs de mesure.

**Claims**

**1.** Method of reproducing the movement, in a reference frame ($R_{ext}$), of an articulated structure consisting of a plurality of segments articulated on each other (S1, S2), at least two of the segments each being provided with a measurement sensor (C1, C2), the method comprising a determination of at least one simulated parameter $(\overline{pos(t)}, \overline{vit(t)}, \overline{ace(t)}, \overline{par(t)})$ able to represent a movement of the structure, **characterised in that** the determination of the simulated parameter comprises:

- a calculation, from all or some of the estimated movement state parameters $(\overline{pos(t)}, \overline{vit(t)}, \overline{acc(t)}, \overline{par(t)})$ those parameters describing a movement of the articulated structure, of a mechanical model (6) of the articulated structure and of a measurement sensor model (7), of estimated measurement data $(\overline{H(t)}, \overline{\gamma(t)})$ , each estimated measurement data item being a data item representing a measurement delivered by a sensor, at least one estimated measurement data item being expressed in the form of an equation comprising terms that combine at least one estimated movement state parameter of a segment that carries a first measurement sensor and at least one estimated movement state parameter of at least one segment different from the segment that carries the first measurement sensor,
- for at least two different measurement sensors, a calculation of a difference (9) between a measurement delivered by the measurement sensor and the estimated measurement data item that represents the measurement delivered,
- a global mathematical processing of the data issuing from the difference, the global processing being a processing of the observer type (10) able to take into account said terms and delivering at least one estimated difference ($\delta pos(t)$ , $\delta vit(s)$ , $\delta acc(t)$, $\delta par(t)$) of an estimated movement state parameter, and
- an adding (11) of the estimated difference of the estimated movement state parameter and the estimated movement state parameter that corresponds to it in order to form the simulated parameter.

**2.** Method according to claim 1, in which the estimated movement state parameters are delivered by a prediction model (5) that models the change in each movement state parameter between two successive times.

**3.** Method according to claim 1 or 2, in which the mechanical model (6) is completed by a priori knowledge data on the structure (12).

**4.** Method according to any claim 1 to 3, in which the measurement sensor model (7) is completed by a priori knowledge data on the sensors (13).

5. Method according to any claim 1 to 4, in which the global mathematical processing of the observer type is an extended Kalman filtering or an optimisation with or without constraints or a particulate filtering or a processing of the sliding horizon observer type.

6. Method according to any claim 1 to 5, which also comprises preliminary observability tests in order to determine whether the measurement sensors are distributed over the articulated segments so that the simulated parameter can be obtained.

7. Method according to any claim 1 to 6, in which at least one measurement sensor is chosen from an accelerometer, a magnetometer, a gyrometer, a force sensor, a goniometer, or a GPS sensor.

8. Method according to any claim 1 to 7, in which the mechanical model of the articulated structure and the sensor model are dynamic models.

9. Method according to any claim 1 to 8, in which the mechanical model of the articulated structure and the mechanical sensor model are merged in a single model that associates a sensor measurement estimation with a global state of the system formed from the articulated structure and the measurement sensors.

**Patentansprüche**

1. Verfahren zur Reproduktion, im Rahmen eines Bezugssystems ($R_{ext}$), der Bewegung eines mit Gelenkten ausgebildeten Strukturgebildes ('Gelenkstruktur'), das aus einer Mehrzahl von untereinander gelenkig verbundenen Segmenten (S1, S2) besteht, wobei wenigstens zwei der Segmente jeweils mit einem Meßfühler bzw. Meßwertgeber (C1, C2) versehen sind und wobei das Verfahren die Bestimmung wenigstens eines simulierten Parameters ($\overline{pos}$ $\overline{(t)}$, $\overline{vit(t)}$, $\overline{acc(t)}$, $\overline{par(t)}$) umfaßt, der eine Bewegung des Strukturgebildes wiedergeben kann, **dadurch** gekennzeichnet daß die Bestimmung des simulierten Parameters umfaßt:

   - eine Berechnung, auf der Grundlage aller oder eines Teils geschätzter simulierter Bewegungszustands-Parameter ($\overline{pos(t)}$, $\overline{vit(t)}$, $\overline{acc(t)}$, $\overline{par(t)}$), die eine Bewegung der Gelenkstruktur beschreiben, eines mechanischen Modells (6) der Gelenkstruktur und eines Meßfühler- bzw. Meßwertgeber-Modells (7), von geschätzten Meßdaten ($\overline{H(t)}$, $\overline{\gamma(t)}$), wobei jeweils jedes geschätzte Meßdatum ein für einen von einem Meßfühler bzw. Meßwertgeber gelieferten Meßwert repräsentatives Datum ist und wobei wenigstens ein geschätztes Meßdatum in Form einer Gleichung mit Termen ausgedrückt ist, welche wenigstens einen geschätzten Bewegungszustands-Parameter eines Segments, das einen ersten Meßfühler bzw. Meßwertgeber trägt, und wenigstens einen geschätzten Bewegungszustands-Parameter wenigstens eines Segments , das von dem den ersten Meßfühler tragenden Seg ment verschieden ist, kombinieren ,
   - für wenigstens zwei verschiedene Meßfühler bzw. Meßwertgeber die Berechnung einer Differenz (9) zwischen einer von dem Meßfühler gelieferten Messung und dem geschätzen Meßdatum, welches die gelieferte Messung darstellt,
   - eine gesamthaft-globale mathematische Verarbeitung der sich aus der Differenz ergebenden Daten, wobei die Globalverarbeitung eine Verarbeiungsbehandlung vom 'Beobachter'-Typ (10) ist, welche geeignet ist, die genannten Terme zu berücksichtigen und wenigstens einen geschätzten Abstand bzw. Abweichung (dpos(t), dvit(t), dacc(t), dpar(t)) eines geschätzten Bewegungszustands-Parameters zu liefern,
   - eine Summation (11) des geschätzten Abstands des geschätzten Bewegungszustands-Parameters und des ihm entsprechenden geschätzten Bewegungszustands-Parameters, zur Bildung des simulierten Parameters.

2. Verfahren nach Anspruch 1, bei welchem die geschätzten Bewegungszustands-Parameter von einem Vorhersage-Modell (5) geliefert werden, das den Entwicklungsverlauf jedes Bewegungszustands-Parameters modell-haft abbildet.

3. Verfahren nach Anspruch 1 oder Anspruch 2, bei welchem das mechanische Modell (6) mit Daten aus der a-priori-Kenntnis der Gelenk-Gebilde- Struktur (12) vervollständigt wird.

4. Verfahren nach einem der Anspruche 1 bis 3, bei welchem das Meßfühler- bzw. Meßwertgeber-Modell (7) durch Daten der a-priori-Kennt-nis der Meßfühler (13) vervollständigt wird.

**5.** Verfahren nach einem der vorhergehenden Ansprüche, bei welchem die gesamthaft-globale mathematische Verarbeitung vom 'Beobachter'-Typ eine erweiterte Kalman-Filterung oder eine Optimierung mit oder ohne Einschränkungen oder eine partikulare Filterung oder eine Verarbeitungs-Behandlung vom 'Beobachter'-Typ mit gleitendem Horizont ist.

**6.** Verfahren nach einem der vorhergehenden Ansprüche, welches des weiteren vorläufige Beobachtbarkeits-Tests umfaßt zur Feststellung, ob die Meßfühler bzw. Meßwertgeber so auf die Gelenkglieder verteilt sind, daß der simulierte Parameter erhalten werden kann.

**7.** Verfahren nach einem der vorhergehenden Ansprüche, bei welchem wenigstens ein Meßfühler bzw. Meßwertgeber aus der Gruppe Beschleu- nigungsmesser, Magnetometer, Gyrometer, Kraft-Meßfühler, Goniometer oder GPS-Meßwertgeber gewählt ist.

**8.** Verfahren nach einem der vorhergehenden Ansprüche, bei welchem das Modell des Gelenkstrukturgebildes und das Meßfühler- bzw. Meßwertgeber-Modell dynamische Models sind.

**9.** Verfahren nach einem der vorhergehenden Ansprüche, bei welchem das mechanische Modell des Gelenkstrukturgebildes und das mechanische Meßfühler-Modell zu einem einzigen Modell vereint sind, das eine Abschützung der Messung des Meßfühlers mit einem Globalzustand des aus der Gelenkstruktur und den Meßfühiern gebildeten Systems verschmolzen sind.

EP 1 990 138 B1

FIG.1

FIG.2

14

FIG.3

5

$\overline{pos(t)}$, $\overline{vit(t)}$, $\overline{acc(t)}$, $\overline{par(t)}$

12

13

8

6

7

$t \longrightarrow t+1$

$\overline{H(t)}$, $\overline{\gamma(t)}$

9

14

$\delta pos(t)$, $\delta vit(t)$, $\delta acc(t)$, $\delta par(t)$

10

11

$\overline{\overline{pos(t)}}$, $\overline{\overline{vit(t)}}$, $\overline{\overline{acc(t)}}$, $\overline{\overline{par(t)}}$

$\overline{pos(t)}, \overline{vit(t)}, \overline{acc(t)}, \overline{par(t)}$

12

8

6

13

7

$\overline{H(t)}, \overline{\gamma(t)}$

9

14

$\delta pos(t), \delta vit(t), \delta acc(t), \delta par(t)$

10

11

FIG.4

$\overline{\overline{pos(t)}}, \overline{\overline{vit(t)}}, \overline{\overline{acc(t)}}, \overline{\overline{par(t)}}$

FIG.5

FIG.6

FIG.7A

FIG.7B

FIG.7C

FIG.7D

FIG.8A

FIG.8B

FIG.8C

FIG.8D

FIG.9A

FIG.9B

FIG.9C

FIG.9D

FIG.10A

FIG.10B

FIG.10C

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• DE 19501094 A1

**Littérature non-brevet citée dans la description**

• **XIAOPING YUN ; CONRADO APARICIO ; ERIC R. BACHMANN ; ROBERT B.MCGHEE.** Implementation and Experimental Results of a Quaternion-Based Kalman Filter for Human Body Motion Tracking. *Proceedings of the 2005 IEEE, International Conference on Robotics and Automation, Barcelone, Espagne,* Avril 2005

• **JIHONG LEE ; INSOO HA.** Real-time Motion Capture for a Human Body using Accelerometers. *Robotica,* 2001, vol. 19, 601-610